# EUROPEAN PATENT SPECIFICATION

(11) **EP 3 669 700 B1**
(45) Date of publication and mention of the grant of the patent: **31.07.2024**
(21) Application number: 19218539.5
(22) Date of filing: 20.12.2019
(51) Int. Cl.: A45D 40/16

(54) **MOULD FOR COSMETIC PRODUCTS AND ITS USE IN A PROCESS FOR MOULDING SUCH PRODUCTS**
FORM FÜR KOSMETISCHE PRODUKTE UND DEREN VERWENDUNG IN EINEM VERFAHREN ZUM FORMEN SOLCHER PRODUKTE
MOULE POUR PRODUITS COSMÉTIQUES ET SON UTILISATION DANS UN PROCÉDÉ DE MOULAGE DE TELS PRODUITS

(30) Priority: 21.12.2018 IT 201800020797
(43) Date of publication of application: 24.06.2020
(73) Proprietor: Gotha cosmetics S.r.l., 24040 Lallio (BG) (IT)
(72) Inventor: SANTILLAN, Marcelo, 24040 Lallio (BG) (IT); MORONI, Fabio, 24040 Lallio (BG) (IT)
(74) Representative: Fisauli, Beatrice A. M.

(56) References cited:
- EP-A2- 0 615 744
- FR-A1- 2 468 455
- FR-A1- 2 956 833
- US-A1- 2008 143 018

## Description

The present invention relates to a mould for cosmetic products, in particular for pasty or semi-solid cosmetic products such as foundation, eye shadows, lipsticks or similar. It also relates to a moulding process in which said mould is used.

More specifically, the invention relates to a mould for cosmetic products of a "pod-like" type, i.e. with a flattened shape, or with a curved upper surface, generally provided in a case-like container.

Typically, said cosmetic products, described in the sector as "cast" or "poured", are obtained by means of a moulding process, comprising the steps wherein the product is brought to the a liquid state by heating, and then poured into a mould adapted to give the product its pod-like shape, and any additional decorations on the surface turned towards the user when using the product (hereinafter referred to as the "visible surface" for brevity), and is then solidified, typically by cooling, and lastly removed from the mould.

Generally, the mould used in this moulding process comprises both a chamber, which is filled with the cosmetic product in a liquid state, and a closing element, which closes the access opening to said chamber, but allows it to be filled thanks to the presence of holes positioned on the closing element.

In this process, filling of the chamber is carried out completely, so that the cosmetic product comes into contact with the inner side of the closing element, i.e. the side facing the inside of the mould, and can therefore adhere or grip the side while solidifying. Once the product is manufactured, the pod will have one side coupled with said inner side of the closing element, while the side opposite the inner side, is in turn fixed, for example by gluing, to the bottom of the make-up set. Accordingly, the closing element is hereinafter referred to also as the "support element" when referring to the manufactured cosmetic product.

For these types of products, once they are manufactured, it is important that the pod remains adhered to the make-up set until it is finished. This adhesion must be guaranteed even following minor bumps and knocks that the make-up case may be subject to in everyday use. For this reason, a quality control test typically carried out on these cosmetic products requires the pod to remain attached to the support element even after the make-up set is subjected to a series of falls or (generally the tests involve assessment after a series of three falls) is dropped from a height of several centimetres (generally around 30 cm).

Following quality control, products that fail the above-mentioned test, i.e. products that detach from said support element, are considered unfit, and are therefore rejected.

Moulds currently used in moulding processes as described above are made of metal.

These moulds and the process in which such moulds are used present several drawbacks, however.

The most significant are those drawbacks encountered in the phase of extracting (or removing) the cosmetic product from the mould once it has solidified.

Indeed, the main difficulty lies in obtaining a pod that is in one piece following the extraction operation. Extraction of the pod from the mould, a significant percentage of times from an industrial point of view, results in the pod breaking; in particular, generally-speaking, there is an incomplete detachment of the pod from the mould, with consequent fragmentation of the pod during extraction. First and foremost, this means that the extracted pod is incomplete, in other words it does not possess the requisite properties of weight and appearance needed for it to be sent to the production line. This pod, along with its fragments, are therefore eliminated and returned to the initial phase of the moulding process.

A further drawback caused by metallic moulds currently used relates to their production cost, whenever one wants or needs to replace them with other moulds having different characteristics, e.g. in terms of shape or capacity, or for the decorative element that will be reproduced on the visible surface of the cosmetic product once it has been packaged.

A further drawback resulting from the use of metal moulds used up to now, in particular with known support elements, is the high percentage of unfit products, i.e. those products that do not display sufficient adhesion, or grip, to the support element. This percentage can reach, or even exceed, 30% of production. Obviously such a high number of rejects can have a negative impact on production costs, and consequently on the cost of the finished product, and also on production times.

Furthermore, these known support elements have a rather high cost due to the material used, which is also metallic, and to the processing required to give it the final shape. EP0615744 discloses a mould for a cosmetic product, comprising a hollow body having a chamber, wherein the body is a sheet made of a flexible and thermoformable polymer material.

The object of the present invention is to overcome these drawbacks.

These drawbacks are reduced, and in some cases overcome, by a mould made of a material having different mechanical and physical properties from those of the metallic materials used up to now. In particular, a mould made of a material that is flexible and, preferably, also has greater thermal expansion, enabling it to overcome the aforementioned drawbacks.

Indeed, a mould with chamber walls made of a flexible material enables complete detachment of the pod from the mould by applying a modest pressure on the wall. In his way, the number of rejects due to pod fragmentation is reduced.

In addition, a mould made of this material displays greater thermal dimensional variations than one made of metal and, therefore, more similar to those of the material of the cosmetic product.

Furthermore, this material can accelerate the solidification phase of the cosmetic product, and thus the entire process, thanks to a reduced thermal capacity. All of this makes it possible to reduce the production costs of pods.

According to a further aspect of the invention, the mould is made of a thermoformable material.

As another advantage, a mould made in such material is easier and more economical to produce than metal moulds. In particular, it is less costly to produce more moulds that differ from those already in use in terms of a specific characteristic such as size, shape of the decorative element present on the inner wall of the chamber, for example on the bottom surface of the mould, to be reproduced on the visible surface of the cosmetic product once it has been packaged. Typically, this decorative element is in the form of a negative profile, so that the visible surface of the finished cosmetic product displays the decorative element as desired. With a mould according to the present invention, it will be simpler and less costly to extend the range of decorative elements on the finished product.

These and other objects are achieved by a mould for cosmetic products comprising at least one hollow body having a chamber delimited by a wall and provided with an access opening, said chamber being adapted to receive the cosmetic product in a liquid state.

Said mould is characterised in that at least said body is made of a flexible polymer material. More precisely, said polymer material is thermoformable and more preferably it is of a thermoplastic type.

According to one variant, said hollow body is made of a transparent material.

The aforementioned properties of the material relate to properties displayed at ambient temperature, unless otherwise specified.

The thermoformable polymer material is chosen, preferably, from polyethylene terephthalate (PET), polyethylene terephthalate-glycol, polyethylene (PE), polycarbonate, polystyrene (PS), silicone, or polyurethane.

More specifically, the hollow body has a chamber delimited by a wall. It is evident that only the inner face of said wall forms the moulding surface that comes into contact with the cosmetic product poured into the mould for moulding.

The moulding surface may be completely smooth or, preferably, it may have at least one area with a decorative element. Typically, this element is a partial mould of a figure that will be reproduced by modelling the surface of the cosmetic product that comes into contact with said area of the moulding surface of the hollow body. The modelling of said surface of the cosmetic product can be either positive or negative, or of both types, depending on whether the moulding surface has protrusions or recesses.

Said body comprises a margin extending substantially horizontally from said opening and at least partially around it, and more preferably completely surrounding said opening.

The size and shape of the hollow body, i.e. of the chamber itself and of the margin, are variable and are not determining for the purposes of the present invention. They depend on the type of cosmetic product to be prepared, i.e. lipstick, foundation, etc. For example, in the case of foundation, the hollow body is typically in the form of an oval or round bowl. In this case, the aforementioned decorative element may be present in an area of the inner face of said wall of the hollow body.

According to one embodiment, the hollow body comprises a film or a layer of thermoformable polymer material. In general, said layer has a thickness of between 0.1 mm and 3 mm. The layer material is typically transparent.

According to the invention, the moulding surface is obtained by a process of thermoforming of the film.

The mould thus configured is simple and economical to produce. Typically, said process for thermoforming the film to produce said part of the mould involves cutting a sheet from a roll of PET film, heating it and positioning it in a vacuum mould in contact with a matrix having a shape corresponding to that of the cosmetic product to be produced.

This procedure makes it possible to produce different moulds quickly and simply, using a relatively inexpensive base material. The mould thus created can also be re-used several times.

According to one embodiment, the mould also comprises a rigid perimeter support component.

The support component is present, generally speaking, whenever the hollow body is made of a material that is not sufficiently rigid in itself, as is the case, for example with a film of PET, and that is not able to retain its shape without the help of the support component. The support component therefore acts as a frame to which the hollow body is fixed in order to hold it up, i.e. with the opening facing upwards.

In this embodiment, the hollow body and the support component can be of a piece, in which case the entire mould is made of plastic material, or, preferably, created using independent parts that can be coupled to one another.

According to one preferable variant, the hollow body can be removably coupled to the support component. In this case, the support component can have a standardised shape and size, so that it can act as a support for hollow bodies of different sizes and possibly different shapes. In this variant, therefore, hollow bodies of different shapes and/or sizes can be fixed to the same frame.

The support component can therefore be re-used several times for the production of cosmetic products even with different shapes, by associating it each time with a body having a mould with a different shape.

In this second embodiment, typically, the support component is made of a metallic material, for example steel, although other materials are possible, for example a rigid plastic material.

A specific example of said independent support component is described below.

Preferably, the mould according to the present invention further comprises a closing element that acts as a partial closure of the opening of the hollow body.

According to this variant, the hollow body has a positioning edge situated near the opening of the hollow body, along the entire wall, on its inner face. In particular, this edge preferably runs along the entire wall parallel to said opening. The distance between this positioning edge and the lip of the opening is generally equivalent to the thickness of the closing element at its outer margin, i.e. the margin in contact with the wall of the hollow body.

The closing element rests on the positioning edge.

The closing element, typically in the form of a perforated plate, is situated near and at the level of the opening of the chamber, so as to close the opening, as mentioned above. Its shape is therefore the same as that of the opening of the chamber.

This closing element is preferably also made of a plastic material. Examples of suitable materials are the copolymer acrylonitrile-butadiene-styrene (ABS) or polymers with equivalent mechanical properties.

A closing element made of plastic material with the properties specified below and particularly suitable for the mould according to the present invention is described in Italian patent application no. 102018000006518 in the name of the present Applicant. A closing element thus produced acts, in the finished product, as a support element, enabling strong, long-lasting adhesion with the pod of cosmetic product, once it has been produced.

In particular, this closing element has a surface adapted to be coupled with said cosmetic product, hereinafter referred to as `inner surface', and a surface adapted to be fixed to the make-up set, hereinafter referred to as the `outer surface'.

Preferably, the closing element has a rough inner surface. Such a surface helps to increase the adhesion of the product to said inner surface of the closing element.

More specifically, this closing element is provided with at least one opening in the central area, through which the liquid cosmetic product is poured during the production process. More preferably, the closing element is provided with two openings, equal to one another and placed in a specular manner with respect to an axis of symmetry.

The opening preferably has a substantially ring-like, elliptical or oval shape.

Said opening is preferably delimited by a raised edge protruding from the inner surface. Said raised edge constitutes a further point for the cosmetic product to grip to the support.

Furthermore, this closing element comprises preferably a plurality of holes arranged near the perimeter of the closing element.

These holes facilitate the complete filling of the chamber of the hollow body, and in particular enable the elimination of air bubbles that could remain trapped between the bottom of the product (pod) and the inner surface of the closing element, reducing the adhesion surface.

According to a preferred embodiment, the side edge of the closing element is also raised and protruding from the inner surface, so as to contain laterally, at least for a section, the pod of cosmetic product. This side edge will rest on said positioning edge.

Furthermore, preferably, on the outer surface of the closing element there are cavities or small recesses. These cavities enable a better distribution of the adhesive material used to fix the closing element to the case, and thereby improves the grip.

The aforementioned edge of the openings, the side edge of the closing element and the rough inner surface, can be obtained simply and without a substantial increase in the costs of the closing element. Thanks to the use of the plastic material, said element can be produced using similar moulding or procedures.

At the end of the moulding process, once the cosmetic product is removed, said closing element remains adhered to the product and acts as a support element for the product, by being positioned on the bottom of the case following production.

Said mould is produced, according to a preferred method, by means of thermoforming of a film or layer made of said polymer material using the "vacuum" technique. This thermoforming process is of a type well known to an expert in the sector, and will therefore not be described in detail.

The layer or film used in the present process has, typically, a thickness of between 0.1 mm and 3 mm.

As mentioned above, the hollow body is preferably transparent.

Furthermore, preferably, the film is processed so as to have a low friction coefficient. According to one variant, the film material is selected from self-lubricating materials.

In the present description, the term "shape" refers to both the general shape of the chamber (e.g. bowl shape) and the shape given to the wall (generally to a portion thereof) of the chamber by the possible presence of a decorative element on this wall in order to reproduce it on the cosmetic product to be produced.

The mould, produced for example as described above, can therefore be used in a moulding process, which is also an object of the present invention.

This process is generally known to an expert in the sector, therefore it will not be described in detail.

Typically, said process comprises at least a step of filling the mould with the product and a step of removing the finished product from the mould.

More in detail, said process comprises at least the following steps in the order described below:
- a step of pouring the cosmetic product in a liquid state into the mould according to the present invention;
- a step of cooling the cosmetic product in said mould; and
- a step of removing the cosmetic product from the mould.

The pouring step consists of filling the mould according to the present invention with the cosmetic product, typically in a liquid state.

In the context of the present invention, the term `liquid state' is meant in a broad sense, i.e. it also comprises a semi-liquid state.

To obtain the desired fluidity during the pouring step, generally the product is previously heated to a temperature of around 85-105 °C. This temperature is generally maintained for the entire pouring step.

Filling of the mould takes place with the mould positioned so that the opening of the chamber, possibly partially closed by the closing element, is turned upwards.

The next step consists of cooling the cosmetic product while it is still in the mould. This step is performed at a temperature that is usually lower than 0 °C, and generally between 0 °C and -20 °C.

Once solidified, the cosmetic product is ready to be extracted from the mould and then packaged.

Removal from the mould can be done manually, by qualified personnel, or mechanically, using an automated system.

To facilitate the removal operation, it is preferable that before this operation the mould is overturned, i.e. turned through 180°, so that the closing element is facing downwards.

Regardless of the removal mode, whether it be manual or otherwise, use in the process of a mould according to the present invention makes it possible to remove the cosmetic product simply by exerting a thrust on the outer wall of the chamber. A slight thrust is usually sufficient for the purpose, for example with a force exerted by the fingers, which is typically in the order of 2 - 5 N (i.e. around 0.2-0.5 Kgf).

A sufficient pressure exerted on the wall, therefore, causes a deformation of the wall. Therefore, given the flexibility of the material from which the chamber wall is made, this deformation causes the complete detachment of the pod of cosmetic product from the mould.

Further characteristics and advantages of the present invention will become more evident from the following description of a preferred but non-exclusive embodiment of a support element as shown in the accompanying drawings, wherein:
- figure 1 shows a perspective view of the mould according to an embodiment of the present invention;
- figure 2 shows a side view of the mould shown in figure 1, in cross-section along a transversal plane A-A;
- figure 3 shows a plan view of the mould shown in figure 1;
- figure 4 shows a side view of the mould shown in figure 1, in cross-section along a transversal plane A-A, complete with the closing element;
- figures 5a and 5b show a plan and perspective view of the closing element for the mould, according to an embodiment of the present invention;

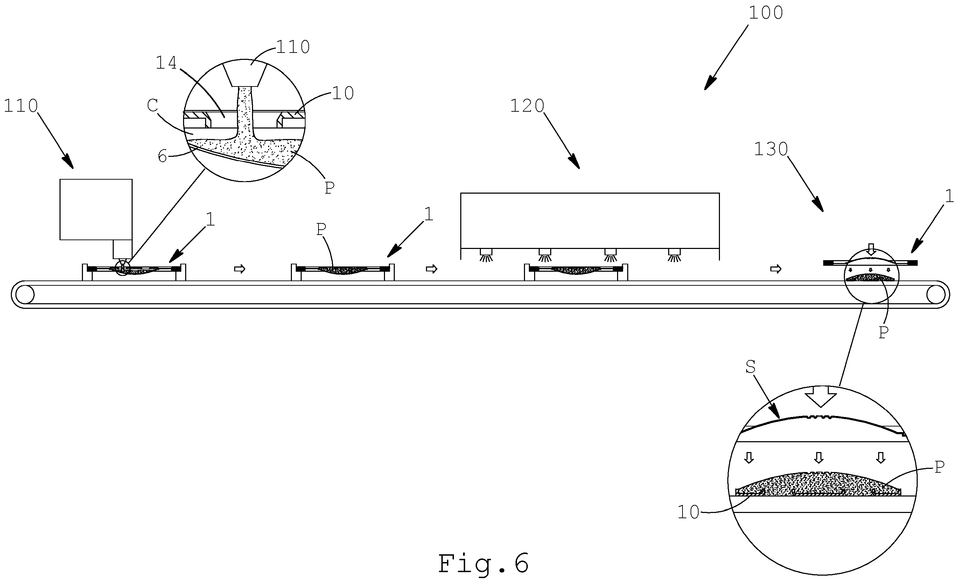

- figure 6 shows a view of the moulding process line according to an embodiment of the present invention.

With reference to the accompanying drawings, the reference number 1 is used to indicate the mould for "poured" type cosmetic products as a whole.

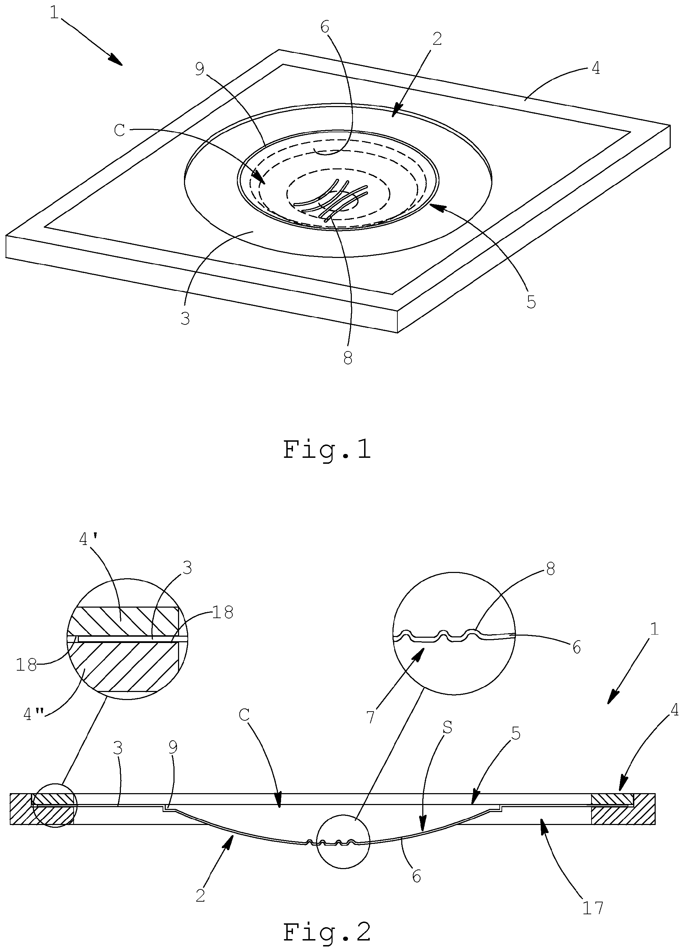

Figures 1 and 2 show a mould 1 comprising a hollow body 2 with a substantially circular opening 5. Near this opening 5 there is a positioning edge 9 and a margin 3 extending radially from the opening. The mould also comprises a rigid support component 4.

In the context of the present invention, relative terms such as 'upper', 'lower' and 'horizontal' refer to the mould or pod in their position of use, which for the mould means oriented substantially in its filling position, as illustrated in figure 1.

The opening 5 usually has a circular or oval shape, but any other shape is possible.

The wall 6 of the hollow body 2 has a bowl-like shape so as to form a concave chamber C, and is connected to the margin 3 that extends radially and on a plane between the opening 5 and the support component 4.

As can be seen in figure 2, the wall 6 at the bottom of the hollow body 2 has a portion 7 the inner face of which has a decorative element 8 in relief or recessed. This decorative element 8 is a partial mould of the decorative element that one wishes to reproduce on the surface of the cosmetic product.

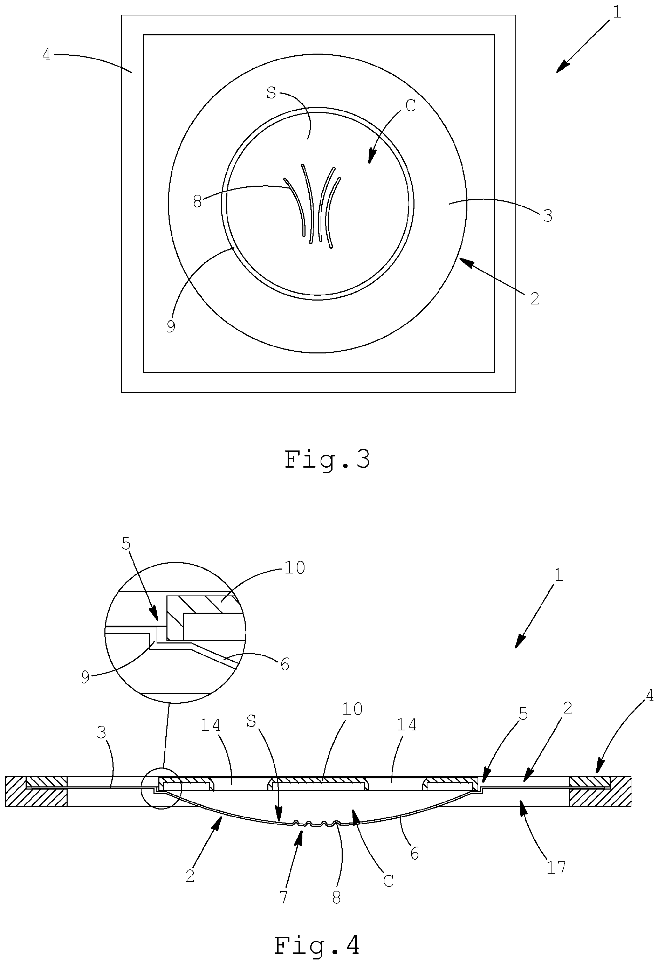

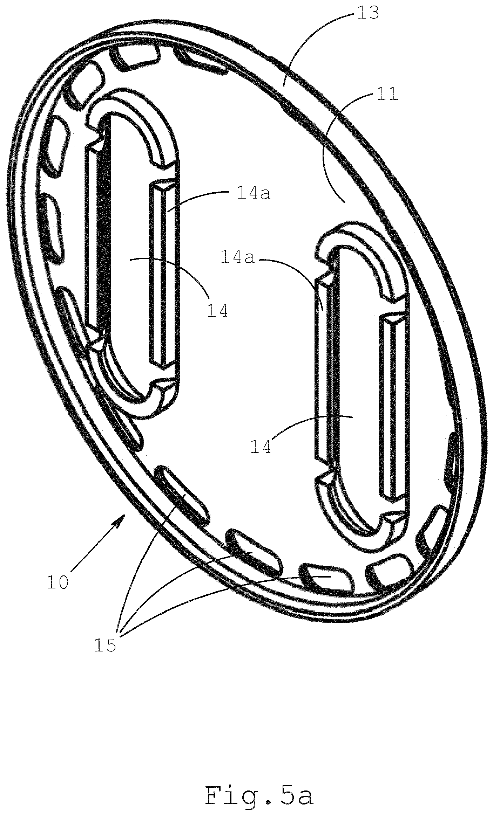

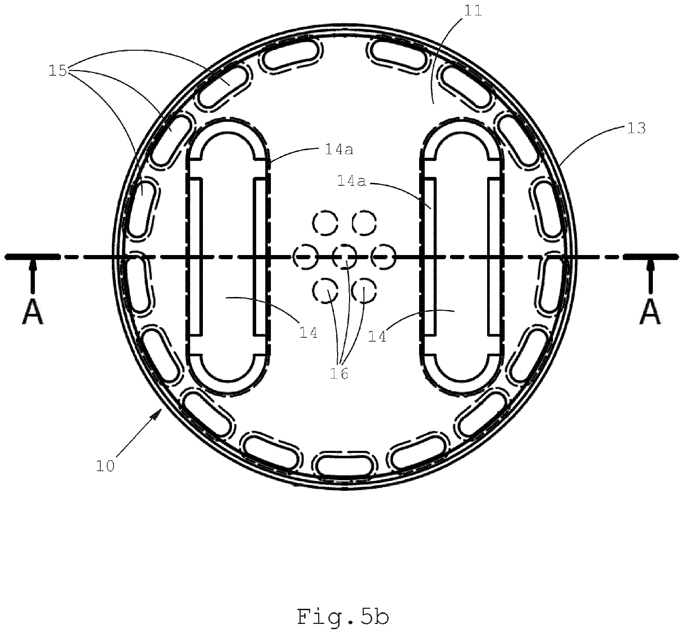

As can be seen in figure 4, the hollow body 2 is closed by a closing element 10 in the form of a substantially circular plate, the two faces of which are defined as the inner surface 11 and outer surface 12 (figures 5a and 5b).

These internal and external references refer to the condition of use of the closing element in which the inner surface 11 is destined to be stably coupled with the cosmetic product P and the outer surface 12 will be fixed to a make-up case housing (not illustrated).

The thickness of the plate is typically constant and is preferably between 0.5 mm and 2.5 mm. Preferably the thickness is around 1 mm.

As illustrated in figures 5a and 5b, the plate 10 has a perimeter edge 13 that is slightly raised so as to protrude from the inner surface 11. This edge 13 rests on the positioning edge 9.

In the central area of the plate 10 there are two openings 14 placed in a specular manner with respect to an axis of symmetry (not shown in the figures).

In the embodiment shown, said openings 14 have a substantially ring-like shape with the two sides along the longer axis, straight and parallel to one another.

Advantageously, according to the invention, the edge 14a of the openings 14 is raised and protruding from inner surface 11.

The height or extension of the edge 14a of the openings and of the perimeter edge 13 is preferably between 1 mm and 3 mm, and more preferably it is around 2 mm.

Along the circumferential edge of the plate 10 there is also provided a plurality of relief holes 15, preferably numbering between 1 and 40. As mentioned above, said holes 15 allow all the air inside the mould to flow out during filling with the liquid cosmetic product, thereby helping to reduce or eliminate the presence of bubbles or air pockets inside the pod and at the interface with the support element.

On the outer surface 12 of the plate 10, on the other hand, there are cavities or recesses 16. Said cavities 16 help to distribute the adhesive material A that is applied to the outer surface 12 to fix the support element to the case.

The closing element 10 is preferably made of ABS by means of a moulding procedure. According to one preferred variant, the mould of the closing element 10 is configured so as to obtain an inner surface 11 that is rough or in any case not entirely smooth.

The surface thus obtained adheres more strongly to the lower surface of the pod of cosmetic product once it has solidified.

Preferably, the closing element 10 is colourless and transparent or translucent. In this way, during the visual quality control inspection it is possible to identify any air bubbles trapped between the inner surface 11 and the bottom of the cosmetic product.

The margin 3 has a variable width L, and in particular moulds can be produced whose width L is inversely proportional to the size of the opening.

The mould according to the present invention measures a few centimetres per side, typically between 5 cm and 20 cm.

The variation in the width L of the margins as a function of the size of the opening makes it possible to have moulds with the same overall dimensions, but with different sizes for the chamber and the opening. This is advantageous in that it makes it possible, as mentioned above, to be able to use the same support component while varying the dimensions of the chamber to produce cosmetic products of different sizes.

The hollow body 2 with its margin 3 are produced using a film of PET, or an equivalent material, by means of a process for thermoforming said film.

The process of thermoforming the film to produce said part of the mould involves several steps. In particular, the first step of the process involves cutting a square sheet from a roll of PET film.

In the next step the sheet is applied to a vacuum device and is then subjected to heating, where it is heated to a temperature of between 100 °C and 250 °C, preferably between 170 °C and 225 °C, and generally at 200°C for a period of time of between 15 and 250 seconds, preferably between 130 and 180 seconds, and typically 160 seconds. At the end of this step, the sheet is applied to a generally male matrix with the required shape and size for the mould to be produced. The film is then made to adhere to the matrix, and then cooled, by means of the formation of a vacuum for a period of time of between 5 and 15 seconds, preferably between 7 and 13 seconds, and typically 10 seconds. Preferably a negative pressure of between -0.2 bar and -1 bar is applied, and typically -0.6 bar.

Figure 2 shows the frame 4 comprising two parts 4', 4", typically overlying one another. Each of these has a passing central cavity 17, in which the hollow body can be housed, and a supporting plane 18 surrounding this central cavity 17 wholly or in part.

Said two parts 4', 4" of the frame 4 act by tightening between them the peripheral portion of the margin 3. More specifically, this margin 3 is placed between the two supporting planes 18 of the two halves of the frame 4.

Said parts of the frame 4 are joined to one another either by snap-fitting or by coupling means not shown in the figures.

The advantage of this type of frame is that it is easy and quick to disassemble and can be of a standard size so as to be able to replace the hollow body 2 with another hollow body 2 of a different size, depending on production needs.

The support component 4 is made of steel or aluminium.

A further advantage of this mould is that, when required, it is not necessary to replace the entire mould, but only a portion thereof, i.e. the hollow body, which results in further savings on the product costs of the cosmetic product.

Figure 7 shows a schematic view of the main steps making up the moulding process for the cosmetic product, carried out on a production device indicated as a whole by the reference number 100.

In this moulding process, there is a phase of filling the mould 1 by means of a filling device 110, then a phase of cooling the cosmetic product in a cooling tunnel 120 until it solidifies, following which the mould is conveyed to a pod-removal station 130 where it is turned through 180°, so that the closing element 10 is facing downwards. In the subsequent pod-removal phase, extraction of the product P from the mould 1 is achieved by means of the manual application of a thrust/pressure exerted on the moulding surface S of the body 2. The cosmetic product thus extracted is whole, and can therefore be sent to the packaging line, while the mould, without any pod fragments, is ready to be re-used for another production cycle.

The invention has been thus described by way of non-limiting example, according to certain preferred embodiments. The scope of the invention is limited by the appended claims.

## Claims

1. A mould (1) for a cosmetic product (P), comprising at least one hollow body (2) having a chamber (C) delimited by a wall (6) with a moulding surface (S) and an access opening (5), said chamber (C) being adapted to receive the cosmetic product (P) in liquid form, said mould (1) further comprising, possibly, a rigid perimeter support component (4), wherein at least said body (2) is made of a flexible, thermoformable polymer material in the form of a film or sheet, said mould (1) being **characterised in that** said body (2) comprises a margin (3), extending radially from said opening (5) and at least partially around it.

2. Mould (1) according to claim 1, **characterised in that** said film or sheet has a thickness of between 0.1 mm and 3 mm.

3. Mould (1) according to claim 2, **characterised in that** said material is transparent.

4. Mould (1) according to any of the previous claims, **characterised in that** said polymer material is of a thermoplastic type.

5. Mould (1) according to claim 4, **characterised in that** said material is chosen from polyethylene terephthalate, polyethylene terephthalate-glycol, polyethylene, polycarbonate, polystyrene, silicone, or polyurethane.

6. Mould (1) according to any of the preceding claims, **characterised in that** the moulding surface (S) is obtained by means of a thermoforming process of said film.

7. Mould (1) according to any of the previous claims, **characterised in that** the support component (4) can be removably coupled with the hollow body (2).

8. Mould (1) according to any of the claims from 1 to 6, **characterised in that** the support component (4) is of a piece with the hollow body (2).

9. Mould (1) according to any of the previous claims, **characterised in that** the support component (4) is made of metal.

10. Mould (1) according to any of the previous claims, **characterised in that** it further comprises a closing element (10) which rests on a positioning edge (9) present on the wall (6) of the chamber (C), along the inner face.

11. Mould (1) according to any of the previous claims, **characterised in that** the moulding surface (S) has at least one area on which a decorative element is traced.

12. A process for moulding a cosmetic product (P) capable of giving said product (P) a pod-like shape wherein is engaged a mould (1) according to one of the previous claims, said process comprising at least one step of filling the mould (1) with the product (P) and at least one step of extracting the product (P) from the mould.

13. Process according to the previous claim, **characterised in that** during this process the step of extracting the product (P) from the mould (1) comprises the application of a thrust exerted on the outer wall of the chamber (C).

14. Process according to claim 13, **characterized in that** the thrust is exerted manually or using automatic means.

## Patentansprüche

1. Eine Form (1) für ein kosmetisches Produkt (P), umfassend mindestens einen Hohlkörper (2), der eine Kammer (C) aufweist, die durch eine Wand (6) mit einer Formfläche (S) und einer Zugangsöffnung (5) begrenzt ist, wobei die besagte Kammer (C) geeignet ist, das kosmetische Produkt (P) in flüssiger Form aufzunehmen, wobei die besagte Form (1) ferner eventuell eine starre Umfangsstützkomponente (4) umfasst, wobei zumindest der besagte Körper (2) aus einem flexiblen, thermoformbaren Polymermaterial in Form einer Folie oder einer Platte hergestellt ist, wobei die besagte Form (1) **dadurch gekennzeichnet ist, dass** der besagte Körper (2) einen Rand (3) umfasst, der sich radial von der besagten Öffnung (5) und zumindest teilweise um sie herum erstreckt.

2. Form (1) gemäß Anspruch 1, **dadurch gekennzeichnet, dass** die besagte Folie oder Platte eine Dicke zwischen 0,1 mm und 3 mm aufweist.

3. Form (1) gemäß Anspruch 2, **dadurch gekennzeichnet, dass** das besagte Material durchsichtig ist.

4. Form (1) gemäß einem jeden der vorhergehenden Ansprüche, **dadurch gekennzeichnet, dass** das besagte Polymermaterial thermoplastischer Art ist.

5. Form (1) gemäß Anspruch 4, **dadurch gekennzeichnet, dass** das besagte Material ausgewählt ist aus Polyethylenterephthalat, Polyethylenterephthalat-Glykol, Polyethylen, Polycarbonat, Polystyrol, Silikon oder Polyurethan.

6. Form (1) gemäß einem jeden der vorhergehenden Ansprüche, **dadurch gekennzeichnet, dass** die Formfläche (S) durch ein Thermoformverfahren der besagten Folie erhalten wird.

7. Form (1) gemäß einem jeden der vorhergehenden Ansprüche, **dadurch gekennzeichnet, dass** die Stützkomponente (4) mit dem Hohlkörper (2) lösbar gekoppelt werden kann.

8. Form (1) gemäß einem jeden der Ansprüche von 1 bis 6, **dadurch gekennzeichnet, dass** die Stützkomponente (4) mit dem Hohlkörper (2) aus einem Stück ist.

9. Form (1) gemäß einem jeden der vorhergehenden Ansprüche, **dadurch gekennzeichnet, dass** die Stützkomponente (4) aus Metall besteht.

10. Form (1) gemäß einem jeden der vorhergehenden Ansprüche, **dadurch gekennzeichnet, dass** sie ferner ein Verschlusselement (10) umfasst, das auf einer Positionierungskante (9) ruht, die an der Wand (6) der Kammer (C) entlang der Innenfläche vorhanden ist.

11. Form (1) gemäß einem jeden der vorhergehenden Ansprüche, **dadurch gekennzeichnet, dass** die Formfläche (S) mindestens einen Bereich aufweist, auf dem ein dekoratives Element aufgezeichnet ist.

12. Ein Verfahren zum Formen eines kosmetischen Produkts (P), das in der Lage ist, dem besagten Produkt (P) eine schalenartige Form zu geben, wobei eine Form (1) gemäß einem der vorhergehenden Ansprüche einbezogen wird, wobei das besagte Verfahren mindestens einen Schritt des Füllens der Form (1) mit dem Produkt (P) und mindestens einen Schritt des Herausnehmens des Produkts (P) aus der Form umfasst.

13. Verfahren gemäß dem vorhergehenden Anspruch, **dadurch gekennzeichnet, dass** während dieses Verfahrens der Schritt des Herausnehmens des Produkts (P) aus der Form (1) die Anwendung eines Stoßes umfasst, der auf die Außenwand der Kammer (C) ausgeübt wird.

14. Verfahren gemäß Anspruch 13, **dadurch gekennzeichnet, dass** der Druck manuell oder durch die Anwendung automatischer Mittel ausgeübt wird.

## Revendications

1. Moule (1) pour produit cosmétique (P), comprenant au moins un corps creux (2) ayant une chambre (C) délimitée par une paroi (6) avec une surface de moulage (S) et une ouverture d'accès (5), ladite chambre (C) étant adaptée pour recevoir le produit cosmétique (P) sous forme liquide, ledit moule (1) comprenant en outre, éventuellement, un composant de support périmétrique rigide (4), dans lequel au moins ledit corps (2) est constitué d'un matériau polymère flexible et thermoformable sous forme de film ou de feuille, ledit moule (1) étant **caractérisé en ce que** ledit corps (2) comprend une marge (3), s'étendant radialement à partir de ladite ouverture (5) et au moins partiellement autour d'elle.

2. Moule (1) selon la revendication 1, **caractérisé par le fait que** ledit film ou feuille a une épaisseur comprise entre 0,1 mm et 3 mm.

3. Moule (1) selon la revendication 2, **caractérisé par le fait que** ledit matériau est transparent.

4. Moule (1) selon l'une des revendications précédentes, **caractérisé par le fait que** ledit matériau polymère est de type thermoplastique.

5. Moule (1) selon la revendication 4, **caractérisé par le fait que** ledit matériau est choisi parmi le polyéthylène téréphtalate, le polyéthylène téréphtalate-glycol, le polyéthylène, le polycarbonate, le polystyrène, le silicone ou le polyuréthane.

6. Moule (1) selon l'une des revendications précédentes, **caractérisé par le fait que** la surface de moulage (S) est obtenue par un procédé de thermoformage dudit film.

7. Moule (1) selon l'une des revendications précédentes, **caractérisé par le fait que** le composant de support (4) peut être couplé de manière amovible avec le corps creux (2).

8. Moule (1) selon l'une des revendications 1 à 6, **caractérisé par le fait que** l'élément de support (4) est d'une seule pièce avec le corps creux (2).

9. Moule (1) selon l'une des revendications précédentes, **caractérisé par le fait que** l'élément de support (4) est en métal.

10. Moule (1) selon l'une des revendications précédentes, **caractérisé par le fait qu'**il comprend en outre un élément de fermeture (10) qui s'appuie sur un bord de positionnement (9) présent sur la paroi (6) de la chambre (C), le long de la face interne.

11. Moule (1) selon l'une des revendications précédentes, **caractérisé par le fait que** la surface de moulage (S) présente au moins une zone sur laquelle est tracé un élément décoratif.

12. Procédé de moulage d'un produit cosmétique (P) permettant de donner à ce produit (P) une forme de gousse dans lequel est engagé un moule (1) selon l'une des revendications précédentes, ce procédé comprenant au moins une étape de remplissage du moule (1) avec le produit (P) et au moins une étape d'extraction du produit (P) du moule.

13. Procédé selon la revendication précédente, **caractérisé par le fait qu'**au cours de ce procédé, l'étape d'extraction du produit (P) du moule (1) comprend l'application d'une poussée exercée sur la paroi extérieure de la chambre (C).

14. Procédé selon la revendication 13, **caractérisé par le fait que** la poussée est exercée manuellement ou à l'aide de moyens automatiques.
